# EUROPÄISCHE PATENTSCHRIFT

(11) **EP 3 329 294 B1**
(45) Veröffentlichungstag und Bekanntmachung des Hinweises auf die Patenterteilung: **07.09.2022**
(21) Anmeldenummer: 16762962.5
(22) Anmeldetag: 15.07.2016
(51) Int. Cl.: G01S 7/40, G01S 13/93

(54) **VERFAHREN UND VORRICHTUNG ZUR KALIBRIERUNG VON ASSISTENZSYSTEMEN VON FAHRZEUGEN**
METHOD AND DEVICE FOR CALIBRATING ASSISTANCE SYSTEMS OF VEHICLES
PROCÉDÉ ET DISPOSITIF D'ÉTALONNAGE DE SYSTÈMES D'AIDE DE VÉHICULES

(30) Priorität: 29.07.2015 DE 102015112368
(43) Veröffentlichungstag der Anmeldung: 06.06.2018
(73) Patentinhaber: Hella Gutmann Solutions GmbH, 79241 Ihringen (DE)
(72) Erfinder: KOLBERG, Ralph, 79111 Freiburg Rieselfeld (DE); HOFMANN, Juergen, 59519 Möhnesee Körbecke (DE); BIERENSTIEL, Fabian, 79206 Breisach (DE); KOCH, Harro, 30974 Wennigsen/Deister (DE)
(74) Vertreter: Pfenning, Meinig & Partner mbB
(86) Internationale Anmeldenummer: PCT/DE2016/100319
(87) Internationale Veröffentlichungsnummer: WO 2017/016541

(56) Entgegenhaltungen:
- EP-A1- 2 113 787
- WO-A1-2012/076468
- US-A- 4 615 618
- US-A1- 2004 165 174
- US-A1- 2005 096 807

## Beschreibung

Die Erfindung betrifft ein Verfahren und eine Vorrichtung zur Kalibrierung von Fahrassistenzsystemen.

Ein solches Verfahren und eine solche Vorrichtung ist bereits aus der WO 2012/076468 A1 vorbekannt. Auch bei dem vorbekannten Verfahren soll der Umfeldsensor eines Fahrzeuges justiert und kalibriert werden. Dabei werden so genannte Radtargets an wenigstens einem der Räder einer Achse des Fahrzeuges befestigt und im weiteren wenigstens ein Bild des Radtargets durch wenigstens eine Messeinheit aufgenommen. Anschließend wird die Position und Ausrichtung des Fahrzeuges im Raum aus dem aufgenommenen Bild des Radtargets bestimmt und im weiteren eine Kalibriertafel mit wenigstens einem Kalibriertafeltarget im Blickfeld der wenigstens einen Messeinheit positioniert. Anschließend wird ein weiteres Bild nun des Kalibriertafeltargets mit der Messeinheit aufgenommen. Hieraus wird die Position der Kalibriertafel in Bezug auf das Fahrzeug aus dem aufgenommenen Bild des Kalibriertafeltargets unter Verwendung der vorstehend bestimmten Position und Ausrichtung des Fahrzeuges im Raum bestimmt. Dann wird mit dem Umfeldsensor des Fahrzeuges ein Bild der Kalibriertafel aufgenommen und im Weiteren die Position und Ausrichtung des Umfeldsensors in Bezug auf die Kalibriertafel aus dem mit dem Umfeldsensor aufgenommenen Bild der Kalibriertafel ermittelt. Schließlich wird die Position und Ausrichtung des Umfeldsensors in Bezug auf das Fahrzeug aus der vorstehend bestimmten Position und Ausrichtung des Umfeldsensors in Bezug auf die Kalibriertafel und der ebenfalls vorstehend bestimmten Position der Kalibriertafel in Bezug auf das Fahrzeug ermittelt.

Der Vorteil des vorbekannten Verfahrens soll darin bestehen, dass die Position und Ausrichtung des Umfeldsensors in Bezug auf das Fahrzeug exakt bestimmbar sind. Es ist daher nicht notwendig, die Kalibriertafel in einem exakten rechten Winkel zur Fahrzeugachse auszurichten, da von einem rechten Winkel abweichende, räumliche Ausrichtungen der Kalibriertafel mithilfe der Messeinheiten bestimmt und bei der Auswertung berücksichtigt werden. Allerdings setzt dies wiederum zwingend den Einsatz der insoweit zusätzlich erforderlichen Messeinheiten zur Bestimmung der exakten Fahrzeugposition voraus.

Ein weiteres Verfahren zum Kalibrieren eines Messplatzes zur Fahrzeugvermessung ist aus der EP 2 616 767 B1 vorbekannt. Dieses Verfahren dient demnach zur Fahrzeugvermessung, insbesondere zur Achsvermessung des Fahrzeuges und erst in einem weiteren Schritt zur Kalibrierung etwa im Fahrzeug vorhandener Kamerasysteme. Die EP 2 113 787 A1 betrifft eine Anlage zur Prüfung der Ausrichtung von Radarsensoren. Die US 2004/0165174 A1 bezieht sich auf eine Justiereinrichtung mit einem einen Reflektor aufweisenden optischen Einstellgerät zum Justieren von Teilen eines Kraftfahrzeuges. Weitere Justiereinrichtungen sind aus der US 4 615 618 und der US 2005/0096807 A1 bekannt.

Ausgehend von diesem Stand der Technik liegt der Erfindung die Aufgabe zu Grunde, ein Verfahren und eine Vorrichtung zur Kalibrierung von Assistenzsystemen in Fahrzeugen, insbesondere von in die Windschutzscheibe integrierten Kamerasystemen zu schaffen, bei dem auf eine aufwändige Vermessung der Hinterachse verzichtet werden kann, so dass das erfindungsgemäße Verfahren nur bei Fahrzeugen eingesetzt werden kann, bei denen unterstellt werden kann, dass die Achsen des Fahrzeuges unbeschädigt und korrekt eingestellt sind. Dies ist etwa dann der Fall, wenn das entsprechende Fahrzeug nicht so verunfallt ist, dass eine Achsvermessung erforderlich ist. Dies ist dann der Fall, wenn beispielsweise lediglich die Windschutzscheibe des Fahrzeuges mit der in die Windschutzscheibe integrierten Kamera beschädigt wurde und diese Scheibe repariert oder ausgetauscht werden muss mit der Folge, dass dann auch die in die Windschutzscheibe integrierten Assistenzsysteme neu kalibriert werden müssen. Im Übrigen sind auch keine zusätzlichen Messeinheiten erforderlich, um die exakte Position eines Fahrzeugs vor einer Kalibriertafel zu ermitteln.

Die Lösung dieser Aufgabe gelingt mittels einer Vorrichtung gemäß Anspruch 1 bzw. einem Verfahren gemäß Anspruch 13. Vorteilhafte Ausgestaltungen der Erfindung können den abhängigen Ansprüchen 2-12 sowie den abhängigen Ansprüchen 14 und 15 entnommen werden.

Die hierzu eingesetzte Vorrichtung umfasst gemäß Anspruch 1 zunächst eine fahrbare Kalibrierungswand mit einer Kalibriertafel mit aufgedrucktem oder sonstig aufgebrachtem, austauschbarem Kalibrierungs-Soll-Bild. Zusätzlich werden zwei Radaufnehmer benötigt, die jeweils an den beiden Vorderrädern des Fahrzeuges befestigbar sind. Die Kalibrierungswand ist verfahrbar ausgebildet und kann daher in ihrer korrekten Relativ-Position zu dem Fahrzeug positioniert werden. Dies gelingt mithilfe der Radaufnehmer, die an den beiden Vorderrädern, aber auch an den beiden Hinterrädern des Fahrzeuges während des Kalibrierungsverfahrens befestigbar sind. Die Radaufnehmer umfassen einen Tragestab, an dem von oben nach unten jeweils voneinander beabstandet eine vorzugsweise rechteckförmige Skala mit einer Strichskalierung, die mittels einer Feststellschraube an dem Tragestab höhenverstellbar befestigt ist, eine zweiflügelige Aufhängevorrichtung zur Aufhängung des Radaufnehmers an dem jeweiligen Fahrzeugrad und einen Laser, der mittels einer Feststellschraube ebenfalls höhenverstellbar befestigt ist.

Zusätzlich weist die Kalibrierungswand einen Justagebalken auf, dessen Längserstreckung größer als oder gleich der üblichen Fahrzeugbreite ist, wobei dieser Justagebalken beidseitig jeweils in seinem Endbereich mit je einem Justagebalken-Spiegel und je einer Justagebalken-Skala versehen ist. Wie nachstehend noch zu erläutern ist, kann die fahrbare Kalibrierungswand mithilfe der an den Radaufnehmern befestigten Laser in einem vom Hersteller des Assistenzsystems vorgegebenen Abstand exakt parallel zur Fahrzeugfront des Fahrzeuges ausgerichtet werden und im übrigen sichergestellt werden, dass das Fahrzeug mittig vor der Kalibrierungswand positioniert ist. Im Weiteren kann dann die höhenverstellbare Kalibriertafel der Kalibrierungswand in der bestimmungsgemäßen Höhe positioniert werden, so dass dann die Kalibrierung des Kamerasystems mithilfe eines an das Fahrzeugsystem anzuschließenden Diagnosegerätes durchgeführt werden kann. Hierbei wird im Wesentlichen mithilfe des Kamerasystems das in der Kamera abgespeicherte Soll-Bild mit dem mithilfe der Kamera im Rahmen der Kalibrierung aufgenommenen Ist-Bild verglichen und die Kamera im Weiteren so eingestellt, dass das aufgenommene Ist-Bild im Ergebnis mit dem Soll-Bild übereinstimmt, mithin das Kamerasystem bestimmungsgemäß kalibriert ist und damit das Assistenzsystem funktionsfähig ist. Das eigentliche Kalibrierungsverfahren als solches ist aber nicht Gegenstand dieser Erfindung, sondern vielmehr vom Hersteller des jeweils eingesetzten Assistenzsystems vorgegeben.

In vorteilhafter Weiterbildung ist der Justagebalken jeweils im Endbereich seiner Längserstreckung oberhalb der in diesem Bereich angeordneten Justagebalken-Spiegel mit je einer weiteren Justagebalken-Skala mit jeweils einer Strich-skalierung bestückt, wobei diese zusätzliche Justagebalken-Skala dazu dient, sicherzustellen, dass das Fahrzeug mittig vor der Kalibrierungswand positioniert ist.

Die Kalibrierungswand umfasst ein Fahrgestell, bestehend aus zwei voneinander beabstandet angeordneten Längsschienen, die durch einen Querträger miteinander verbunden sind. Dabei weisen die Längsschienen jeweils mindestens eine Gewindebohrung auf, die jeweils mit Stellschrauben versehen sind, die so bemessen sind, dass diese länger sind als der übliche Abstand der Oberkante der Längsschienen von dem Aufstellgrund, so dass mittels der Stellschrauben etwaige Bodenunebenheiten derart ausgeglichen werden können, dass sichergestellt ist, dass die Kalibrierungswand lotrecht aufgestellt ist, das heißt umgangssprachlich "im Wasser steht".

Als zusätzliches Hilfsmittel ist der waagerecht an dem Haltegestell der Kalibrierungswand befestigte Justagebalken mit einer Justagebalken-Libelle zur Überprüfung der waagerechten Ausrichtung des Justagebalkens, und damit aber auch der Kalibrierungswand insgesamt und somit auch der an der Kalibrierungswand befestigten Kalibriertafel, versehen.

Die Kalibriertafel selbst ist an diesem Haltegestell höhenverstellbar befestigt, wobei hierzu die Kalibriertafel in vorteilhafter Ausgestaltung auf ihrer dem Kalibrierungs-Soll-Bild abgewandten Rückseite mit einem Haltegriff versehen ist, um durch Betätigung dieses Haltegriffs die gegebenenfalls erforderliche Höhenverstellung der Kalibriertafel in Übereinstimmung mit den Vorgaben des Herstellers des zu kalibrierenden Assistenzsystems vornehmen zu können.

In weiterer Ausgestaltung kann dann die Kalibriertafel mittels einer oder mehrerer Feststellschrauben in der bestimmungsgemäßen Höhe an dem Haltegestell fixiert werden.

Bei der Ausrichtung der Kalibriertafel in der bestimmungsgemäßen Höhe hat es sich als hilfreich erwiesen, dass an dem Haltegestell der Kalibrierungswand zusätzlich ein mit einer Bemaßung versehener Messstab angeordnet ist, der bestimmungsgemäß auf dem Aufstellgrund des Fahrgestells aufsteht, so dass an dem Messstab die jeweils eingestellte Höhe der Kalibriertafel ablesbar ist.

In abermals vorteilhafter Ausbildung sind die Tragestäbe der Radaufnehmer in ihrem oberen Bereich jeweils zur Ausbildung eines Tragegriffs abgewinkelt. Hierdurch können die Radaufnehmer ohne weiteres an dem Tragegriff getragen und bedarfsweise an den Rädern des Fahrzeuges in einfacher Weise mithilfe der zweiflügeligen Aufhängevorrichtung der Radaufnehmer befestigt werden.

Dabei weist auch der Radaufnehmer eine bei bestimmungsgemäßer Positionierung des Radaufnehmers waagerecht ausgerichtete Radaufnehmer-Skala auf, wobei auch diese Radaufnehmer-Skala mit einer Radaufnehmer-Libelle bestückt ist, um die ordnungsgemäße Positionierung des Radaufnehmers insbesondere an dem Fahrzeugrad derart, dass der Tragestab lotrecht und die Radaufnehmer-Skala waagerecht ausgerichtet sind, in einfacher Weise durch Ablesen der Radaufnehmer-Libelle realisierbar ist.

An dem erwähnten Tragestab der Radaufnehmer ist jeweils ein Laser mittels einer Welle befestigt, die eine Durchführung für den Tragestab aufweist. Dabei ist bei bestimmungsgemäßer Positionierung der Laser auf der dem Fahrzeug abgewandten Seite des Tragestabes angeordnet, wobei die Welle auf der anderen Seite des Tragestabes in Richtung des Fahrzeuges vorspringt und in einen Kreuzverbinder mündet, an dem eine waagerecht angeordnete Querstange befestigt ist, die beidseitig mit Pufferelementen bestückt ist, die als Abstandshalter gegenüber dem Fahrzeugrad dienen und im übrigen sicherstellen, dass weder die Fahrzeugfelge noch der angrenzende Kotflügel bei der Montage und Justage der Radaufnehmer beschädigt wird.

In weiterer Ausgestaltung kann die erfindungsgemäße Vorrichtung auch zur Kalibrierung von in Fahrzeugen integrierten Radarsystemen etwa zur Abstands-messung eingesetzt werden. Hierzu kann an der Kalibrierungswand eine Magnetplatte befestigt werden, die zur Kalibrierung der Radarsysteme benötigt wird. Je nach Hersteller müssen diese Winkelplatten in unterschiedlichen Winkeln angeordnet werden, so dass die Aufhängung der Magnetplatte verstellbar, vorzugsweise in 2°-Winkelschritten verstellbar, ausgebildet ist. Bei einigen Radarsystemen wird auch die Varianz der Winkelstellung der Magnetplatte in den genannten Schritten zur Kalibrierung der Radarsysteme benötigt.

Die Erfindung wird nachstehend anhand eines in der Zeichnung nur schematisch dargestellten Ausführungsbeispiels näher erläutert.

Es zeigen:
- Figur 1:: eine Kalibrierungswand in der Frontansicht,
- Figur 2:: die Kalibrierungswand gemäß Figur 1 in einer perspektivischen Rückansicht,
- Figur 3:: ein Detail der in den Figuren 1 und 2 dargestellten Kalibrierungswand,
- Figur 4:: einen Radaufnehmer in einer perspektivischen Ansicht,
- Figur 5:: ein vor der Kalibrierungswand positioniertes Fahrzeug mit an den Vorderrädern befestigten Radaufnehmern in einer Seitenansicht,
- Figur 6:: das in Figur 5 dargestellte Fahrzeug vor der Kalibrierungswand mit beidseitig daran befestigten Radaufnehmern in einer Draufsicht,
- Figur 7:: einen Justagebalken der Kalibrierungswand in einer Frontansicht,
- Figur 8:: ein Detail des in Figur 7 dargestellten Justagebalkens,
- Figur 9:: ein Detail des vor der Kalibrierungswand positionierten Fahrzeuges in einer Frontansicht mit an den Hinterrädern des Fahrzeuges befestigten Radaufnehmern, sowie
- Figur 10:: den am Hinterrad des Fahrzeuges befestigten Radaufnehmer in einer perspektivischen Detailansicht sowie eine weitere Detailansicht einer Radaufnehmer-Skala.

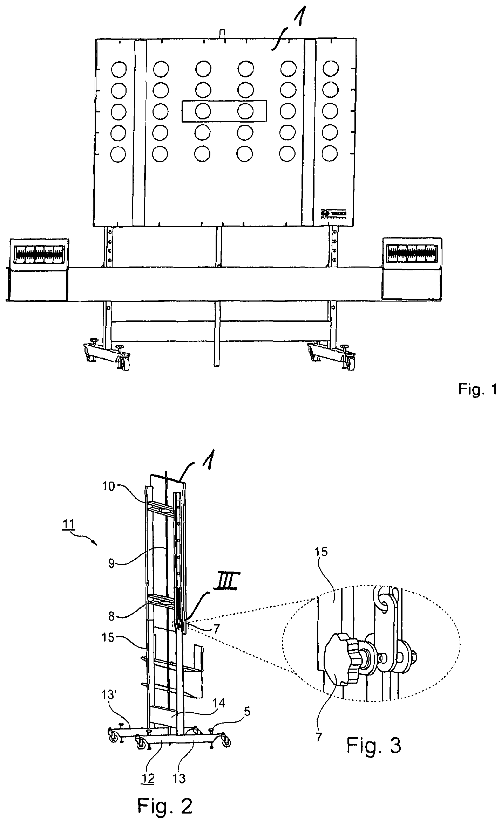

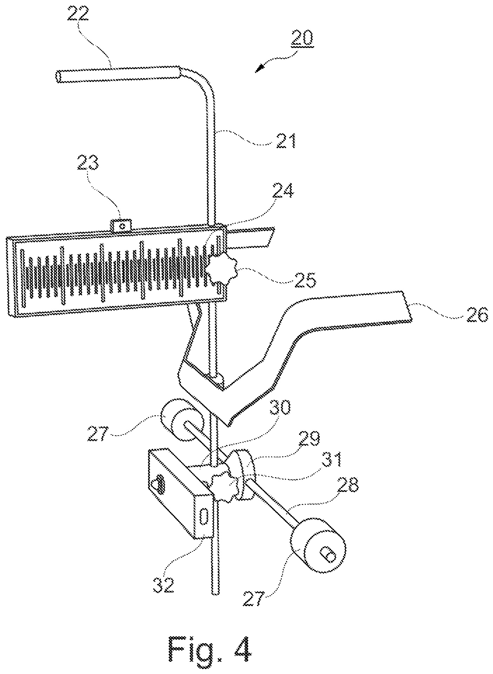

Die Figuren 1-4 zeigen zunächst die zur Umsetzung des erfindungsgemäßen Verfahrens benötigten Bestandteile der erfindungsgemäßen Vorrichtung, nämlich in den Figuren 1-3 eine Kalibrierungswand 11 sowie in Fig. 4 einen Radaufnehmer 20, wobei zur Durchführung des Verfahrens zwei dieser Radaufnehmer 20 benötigt werden.

Gemäß der Darstellung in Fig. 1 umfasst die Kalibrierungswand 11 eine an einem Haltegestell 15 befestigte Kalibriertafel 1 mit einem aufgedruckten oder sonstig aufgebrachten Soll-Kalibrierungs-Bild. Das Haltegestell 15 steht auf einem mit vier Rädern versehenen Fahrgestell 12. Im übrigen ist die Kalibrierungswand 11 in dem Bereich zwischen der Kalibriertafel 1 und dem Fahrgestell 13 mit einem waagerecht angeordneten Justagebalken 4 versehen, der sich beidseitig über die Kalibriertafel 1 seitlich hinaus erstreckt. Der Justagebalken 4 ist an seinen beidseitigen Endbereichen jeweils mit einer Justagebalken-Skala 2 sowie einem Justagebalken-Spiegel 3 bestückt. In nicht weiter dargestellter konkreter Ausgestaltung kann die Justagebalken-Skala 2 mit dem Justagebalken 4 verschwenkbar verbunden sein, so dass aufgrund der identischen Abmessungen der Justagebalken-Skala 2 und des Justagebalken-Spiegels 3 bei abgeklappter Justagebalken-Skala 2 der JustagebalkenSpiegel 3 mittels der Justagebalken-Skala 2 abgedeckt ist.

Im Übrigen ist das Fahrgestell 12 mit vier Stellschrauben 5 bestückt, die jeweils in einer Gewindebohrung der einander parallel angeordneten Längsschienen 13, 13' des Fahrgestells 12 derart angeordnet sind, dass sie bestimmungsgemäß verstellbar auf dem Aufstellgrund der Kalibrierungswand 11 aufstehen, so dass mittels dieser Stellschrauben 5 die Kalibriertafel 1 so ausgerichtet werden kann, dass deren Oberkante waagerecht steht und deren Seitenkanten jeweils senkrecht, also die Kalibriertafel 1 umgangssprachlich ausgedrückt "im Wasser steht". Die korrekte Ausrichtung der Kalibriertafel 1 kann mittels einer auf dem Justagebalken 4 angeordneten Justagebalken-Libelle überprüft werden, da der Justagebalken 4 ebenfalls waagerecht ausgerichtet ist.

Gemäß der Darstellung der Kalibrierungswand 11 in Fig. 2 ist die Kalibriertafel 1 höhenverstellbar an dem Haltegestell 15 befestigt, wobei die Höhenverstellung mittels eines Haltegriffs 8, der mit der Kalibriertafel 1 verbunden ist, bewirkt werden kann. Gemäß der Detaildarstellung in Fig. 3 kann die Kalibriertafel 1 in ihrer bestimmungsgemäßen Höhe mittels einer ersten Feststellschraube 7 fixiert werden.

Um die Höhe der Kalibriertafel 1 bestimmen zu können, ist in entsprechenden Durchführungen durch einen Querträger 14 des Fahrgestells 12, des Haltegriffes 8 sowie durch entsprechende Abkantungen des ebenfalls an dem Haltegestell 15 befestigten Justagebalkens 4 ein Messstab 9 lotrecht angeordnet, der bestimmungsgemäß ebenfalls auf dem Aufstellgrund aufsteht und darüber hinaus mit einer Skala, also einer Bemaßung versehen ist, die die jeweilige Höhe der Kalibriertafel 1 angezeigt. Als zusätzliches Hilfsmittel ist der Messstab 9 mit Messtab-Markierungen zur Anzeige der bestimmungsgemäßen Höhe der Kalibriertafel 1 versehen.

Wie bereits vorstehend ausgeführt wurde, sind als zweites Hilfsmittel zur Realisierung des erfindungsgemäßen Verfahrens zwei einander identisch ausgebildete Radaufnehmer 20 vorgesehen, wobei einer der Radaufnehmer 20 in Fig. 4 dargestellt ist. Danach umfasst der Radaufnehmer 20 zunächst einen Tragestab 21, dessen oberer Bereich unter Ausbildung eines Tragegriffs 22 abgewinkelt ist. An dem Tragestab 21 sind von oben nach unten eine Radaufnehmer-Skala 24 mit einem Strichcode sowie eine zweiflügelige Aufhängevorrichtung 26 und ein Laser 32 befestigt.

Die Radaufnehmer-Skala 24 ist mittels einer weiteren Feststellschraube 25 höhenverstellbar an dem Tragestab 21 befestigt. Die ordnungsgemäße waagerechte Ausrichtung der Radaufnehmer-Skala 24 kann mittels einer an der Oberkante der Radaufnehmer-Skala 24 befestigten Radaufnehmer-Libelle 23 überprüft werden. Wie ohne weiteres aus der Zeichnung ersichtlich, ist der Tragestab 21 dann senkrecht ausgerichtet, wenn die im rechten Winkel mit dem Tragestab 21 verbundene Radaufnehmer-Skala 24 waagerecht ausgerichtet ist.

Unterhalb dieser Radaufnehmer-Skala 24 ist eine zweiflügelige Aufhängevorrichtung 26 fest mit dem Tragestab 21 verbunden, wobei die zweiflügelige Ausbildung der Aufhängevorrichtung 26 sicherstellt, dass der Tragestab 21 unter Auflage der zweiflügeligen Aufhängevorrichtung 26 an einem Fahrzeugrad derart angehängt werden kann, dass bei bestimmungsgemäßer Ausrichtung des Tragestabes 21 mittels derSkalen-Libelle 23 der Tragestab 21 lotrecht ausgerichtet ist und die Radaufnehmer-Skala 24 waagerecht angeordnet ist.

Unterhalb der Aufhängevorrichtung 26 ist höhenverstellbar mittels einer Laser-Feststellschraube 31 ein Laser 32 befestigt. Dabei ist der Laser 31 über eine Welle 30 mit einer Durchführung für den Tragestab 21 mit dem Tragestab höhenverstellbar verbunden, wobei die Welle 30 auf ihrer dem Laser 32 abgewandten Seite des Tragestabs 21 im Sinne eines Abstandshalters von dem jeweiligen Fahrzeugrad weitergeführt ist und schließlich in einen Kreuzverbinder 29 mündet, durch den eine Querstange 28 geführt ist, die beidseitig von zwei Pufferelementen 27 in ihrem jeweiligen Endbereich ummantelt ist, wobei diese Pufferelemente 27 einerseits als Abstandshalter und andererseits als Schutz-elemente dienen, so dass mit der Aufhängevorrichtung 26, insbesondere bei der Montage der Radaufnehmer 20 an dem jeweiligen Fahrzeugrad, weder der Kotflügel noch die Felge des Fahrzeuges 34 beschädigt, insbesondere verkratzt, wird.

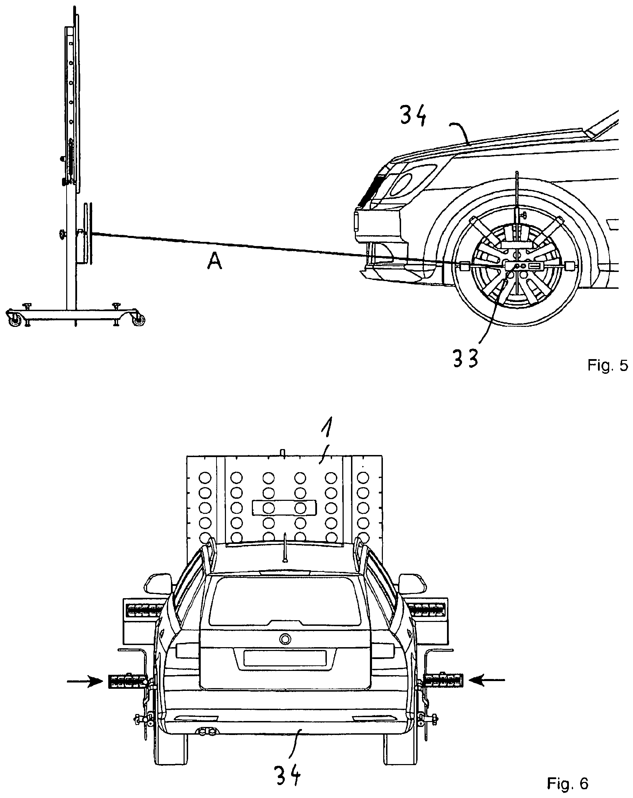

Nachstehend wird das erfindungsgemäße Verfahren anhand der nachfolgenden Figuren 5-10 beschrieben.

In einem ersten Schritt muss die Einstellung des Abstandes A eines Fahrzeuges 34 gemäß der Darstellung in Figur 5 ermittelt werden. Hierzu werden zunächst die beiden Radaufnehmer 20 an den beiden Vorderrädern des Fahrzeuges 34 mittels der zweiflügeligen Aufhängevorrichtung 26 eingehängt. Nach dem Einhängen der Radaufnehmer 20 werden diese so ausgerichtet, dass die Radaufnehmer-Skala 24 waagerecht und der Tragestab 21 lotrecht steht. Anschließend wird bestimmungsgemäß die Laserfeststellschraube 31 gelöst, so dass die Welle 30 zur Befestigung des Lasers 32 in ihrer Höhe verstellt werden kann. Im Weiteren wird dann die Welle 30 so ausgerichtet, dass deren zentrale Achse mit dem Radmittelpunkt des Vorderrades fluchtet. Im Weiteren wird noch einmal an beiden Radaufnehmern 20 mittels der Radaufnehmer-Libellen 23 und gegebenenfalls über eine Verstellung der weiteren Feststellschraube 25 die Radaufnehmer-Skala 24 so ausgerichtet, dass diese waagerecht steht.

Nach diesen Vorarbeiten kann mittels eines einfachen Bandmaßes der Abstand des Radmittelpunktes von dem Justagebalken 4 gemessen werden, wobei der Justagebalken 4 in einer Ebene mit der Oberfläche der Kalibriertafel 1 angeordnet ist, so dass dieser Abstand gleichzeitig den Abstand des Radmittelpunktes zur Ebene der Kalibriertafel 1 beschreibt.

Das erfindungsgemäße Verfahren läuft dann in folgenden Schritten ab:
In einem ersten Schritt werden gemäß Fig. 5 die beiden Radaufnehmer 20 jeweils an einem der beiden Vorderräder des Fahrzeuges 34 derart eingehängt, dass die zweiflügelige Aufhängevorrichtung 26 auf den Radmänteln der Vorderräder des Fahrzeuges 34 aufliegt. In einem weiteren Schritt wird dann bei jedem Radaufnehmer 20 die jeweilige weitere Feststellschraube 25 gelöst, so dass dann die Welle 30 mit dem Kreuzverbinder 29 in der Höhe verstellbar ist. Dann wird die Welle 30 mit dem Kreuzverbinder 29 so ausgerichtet, dass die Zentralachse der Welle 30 mit dem jeweiligen Radmittelpunkt 33 des Fahrzeuges 34 fluchtet. Damit ist auch sichergestellt, dass der Laser 32 exakt in Höhe des Radmittelpunktes ausgerichtet ist. In einem weiteren Schritt wird dann die Radaufnehmer-Skala 24 mittels der Radaufnehmer-Libelle 23 so ausgerichtet, dass die Radaufnehmer-Skala 24 waagerecht ausgerichtet ist und somit auch der Tragestab 21 lotrecht ausgerichtet ist. Dies wird durch entsprechende Anordnung der zweiflügeligen Aufhängevorrichtung 26 sichergestellt.

Nachdem auf diesem Wege die Radaufnehmer 20 bestimmungsgemäß montiert sind, wird dann mit einem Metermaß, das je nach Ausführung fest mit dem Justagebalken 4 verbunden sein kann, der Abstand des Radmittelpunktes 33 von dem Justagebalken 4 gemessen, wobei dieser Abstand gleichbedeutend mit dem Abstand der Radmittelpunkte 33 der beiden Vorderräder des Fahrzeuges 34 von der in gleicher Ebene mit dem Justagebalken 4 angeordneten Kalibriertafel 1 ist. Dabei wird die mittels des Fahrgestells 12 verfahrbare Kalibrierungswand 11 in einem vom jeweiligen Hersteller des zu kalibrierenden Assistenzsystems vorgegebenen Abstand A vor dem Fahrzeug 34 positioniert.

Diese Schritte sind für jeden der beiden an den beiden Vorderrädern des Fahrzeuges 34 zu montierenden Radaufnehmer 20 durchzuführen, wobei anschließend die Kalibrierungswand 11 im richtigen Abstand vor dem Fahrzeug 34 positioniert ist.

In einem zweiten Schritt muss dann sichergestellt werden, dass die Kalibrierungswand 11 exakt mittig vor dem Fahrzeug in dem vorgegebenen Abstand positioniert wird.

Hierzu werden die beiden Radaufnehmer 20 wiederum wie vorstehend beschrieben jeweils an den Hinterrädern des Fahrzeuges 34 mithilfe der zweiflügeligen Aufhängevorrichtung 26 montiert und wie vorstehend beschrieben so ausgerichtet, dass nach der Ausrichtung wiederum die beiden Radaufnehmer-Skalen 24 der beiden Radaufnehmer 20 jeweils waagerecht ausgerichtet sind und somit auch die im rechten Winkel hierzu angeordneten Tragestäbe 21 lotrecht ausgerichtet sind. Auch hier wird wiederum die Ausrichtung, wie vorstehend beschrieben, bei beiden Radaufnehmern 20 mit den jeweils auf den Radaufnehmer-Skalen 24 angeordneten Radaufnehmer-Libellen 23 realisiert.

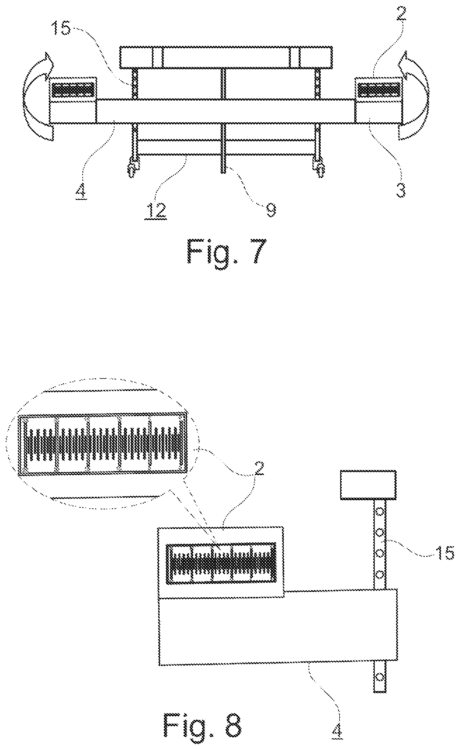

Anschließend werden gemäß Figur 7 zunächst die die beiden Justagebalken-Spiegel 3 verdeckenden Justagebalken-Skalen 2 hochgeklappt, so dass nun sowohl die Spiegelflächen der Justagebalken-Spiegel 3 und die Justagebalken-Skala 2 in Richtung des vor der Kalibrierungswand 11 angeordneten Fahrzeuges 34 weisen. Nun werden die Laser 32 der Radaufnehmer 20 eingeschaltet. Dann werden die Laser-Feststellschrauben 31 der beiden Laser 32 gelöst, so dass die Laser 32 anschließend verschwenkbar sind und so ausgerichtet werden können, dass die von den Lasern 32 emittierten Laserstrahlen auf die nach oben geklappte Justagebalken-Skala 2 strahlen, wie in Figur 8 dargestellt ist. In dieser Position wird der Laser 32 mittels der Laser-Feststellschraube 31 fixiert.

Anschließend wird die Kalibrierungswand 11unter Beibehaltung des Abstandes vor dem Fahrzeug so nach links und rechts verschoben, dass anschließend auf beiden Justagebalken-Skalen 2 der emittierte Laserstrahl auf den identischen Punkt der Justagebalken-Skala 2 trifft, mithin die Kalibrierungswand 11 gemäß Figur 6 mittig vor dem Fahrzeug 34 angeordnet ist.

In einem weiteren Schritt muss nun sichergestellt werden, dass trotz des Verschiebens der Kalibrierungswand 11 die Kalibrierungswand 11 weiterhin parallel zur Front des Fahrzeuges 34 in dem bestimmungsgemäßen Abstand ausgerichtet ist. Hierzu werden die Laser 32 nunmehr so ausgerichtet, dass sie nicht mehr auf die Justagebalken-Skala 2, sondern vielmehr auf den Justagebalken-Spiegel 3 strahlen. Dieser Schritt wird bei beiden Radaufnehmern 20 durchgeführt.

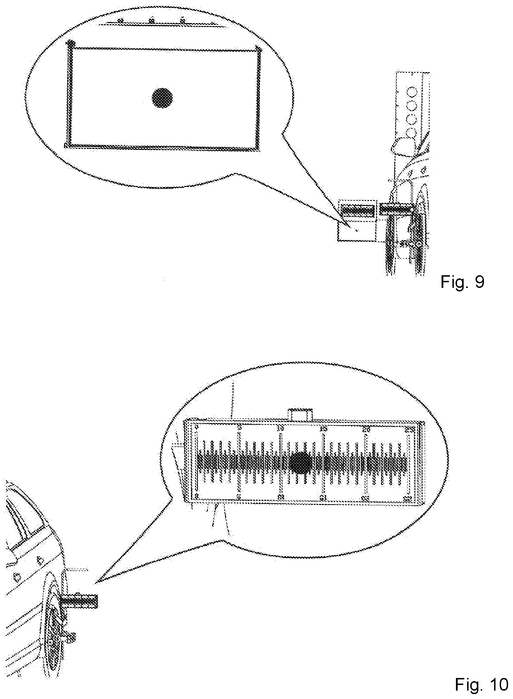

Nun strahlen die von den Lasern 32 emittierten Laserstrahlen gemäß der Darstellung in Fig. 9 auf die Justagebalken-Spiegel 3, so dass die mittels der Laser 32 emittierten Laserstrahlen jeweils von den Justagebalken-Spiegeln 3 reflektiert werden und gemäß Figur 10 auf die Radaufnehmer-Skalen 24 der beiden Radaufnehmer 20 reflektiert werden. In einem abschließenden Schritt muss dann erforderlichenfalls die Kalibrierungswand 11 gegebenenfalls noch geringfügig um ihre lotrechte Zentralachse axial verschwenkt werden, bis schließlich die an dem linken und an dem rechten Hinterrad angeordneten Radaufnehmer-Skalen gemäß der Darstellung in Fig. 10 denselben Wert anzeigen. Sobald dies der Fall ist, steht die Kalibrierungswand 11 parallel vor der Fahrzeugfront des Fahrzeuges.

Anschließend können die Laser 32 abgeschaltet werden.

In einem weiteren Schritt wird dann mittels der in Fig. 2 dargestellten Stellschrauben 5 des Fahrgestells 12 der Kalibrierungswand 11mittels einer horizontalen und einer vertikalen Justagebalken-Libelle, die jeweils an dem Justagebalken 4 befestigt sind, die Kalibrierungswand 11 so ausgerichtet, dass der an dem Haltegestell 15 befestigte Justagebalken 4 so ausgerichtet ist, dass dessen Oberkante waagerecht steht und dessen beide Seitenkanten jeweils senkrecht ausgerichtet sind, mithin der Justagebalken 4 und damit auch die ebenfalls an dem Haltegestell 15 befestigte Kalibriertafel 1 im Wasser stehen. In diesem Zustand ist das Fahrgestell 12 darüber hinaus blockiert, da in diesem Zustand zumindest einige der Stellschrauben 5 auf dem Aufstellgrund der Kalibrierungswand 11aufstehen und somit die Verfahrbarkeit blockieren. In vorteilhafter Ausgestaltung können darüber hinaus die Laufräder des Fahrgestells 12 in dieser Position blockiert werden.

Nachdem somit die Kalibrierungswand 11 in ihrer bestimmungsgemäßen Position ordnungsgemäß ausgerichtet fixiert ist, kann dann die Kalibriertafel 1 mittels des Haltegriffs 8 in ihrer Höhe positioniert werden, wobei hierzu zunächst die ersten Feststellschrauben 7, mit denen die Kalibriertafel 1 links und rechts an dem Haltegestell 15 fixiert ist, gelöst werden, so dass anschließend mittels des Haltegriffs 8 die Kalibriertafel in ihrer Höhe verstellbar ist. Dabei zeigt der Messstab 9 gemäß Fig. 2 den jeweiligen Abstand der Unterkante der Kalibriertafel 1 vom Aufstellgrund an. Mit diesen Hilfsmitteln wird nun die Kalibriertafel 1 in ihrer von dem zu kalibrierenden Assistenzsystem vorgeschriebenen Höhe mithilfe der ersten Feststellschrauben 7 fixiert, wobei hierzu erforderlichenfalls farbige Markierungen für die wichtigsten Hersteller bereits an dem Messstab 9 in Form von farbigen Messstab-Markierungen in der bestimmungsgemäßen Höhe vorgesehen sein können bzw. auch nachträglich angebracht werden können. In dieser Stellung werden dann die beiden Feststellschrauben 7 wiederum angezogen. Zusätzlich kann der nun nicht mehr benötigte Messstab 9, der in den entsprechenden Durchführungen des Haltegestells 15 und des Justagebalkens 4 sowie durch einen Querträger 14 geführt ist, etwas nach oben bewegt werden, so dass er in dieser Stellung beabstandet vom Aufstellgrund fixiert werden kann, um zu vermeiden, dass er bei einem späteren Verfahren der Kalibrierungswand 11 nicht versehentlich beschädigt wird.

Nachdem diese Schritte abgeschlossen sind, kann dann die Kalibrierung des vorzugsweise in einer Windschutzscheibe des Fahrzeuges 34 angeordneten Assistenzsystems, insbesondere einer Kamera durchgeführt werden, wobei in diesem Zusammenhang mittels der Kamera ein oder mehrere Bilder des Soll-Kalibrierungs-Bildes, das entweder auf die Kalibriertafel 1 aufgedruckt oder sonstig auf dieser aufgebracht ist, aufgenommen werden, wobei die Kalibrierung dann abgeschlossen ist, wenn die aufgenommenen Ist-Bilder den ebenfalls in der Kamera hinterlegten Soll-Bildern im Rahmen einer vorgegebenen Toleranz entsprechen. Anschließend ist das in die Windschutzscheibe integrierte Kamerasystem wiederum kalibriert und voll funktionsfähig.

Der Vorteil des vorstehend beschriebenen Verfahrens besteht darin, dass die ansonsten erforderliche Vermessung der Hinterachse gemäß den vorstehenden Ausführungen vollständig entfallen kann, so dass für die Durchführung des Verfahrens kein Achsvermessungsstand und auch nicht der Aufwand einer Achsvermessung erforderlich sind. Dementsprechend wird dieses Verfahren bestimmungsgemäß in Fällen eingesetzt, in denen eine Beschädigung der Hinterachse des Fahrzeuges 34 ausgeschlossen werden kann, also beispielsweise wenn an dem jeweiligen Fahrzeug 34 lediglich die Frontscheibe verunfallt ist, so dass bei vernünftigem Verständnis eine Beschädigung der Hinterachse des Fahrzeuges 34 ausgeschlossen werden kann.

In zusätzlicher, hier nicht weiter dargestellter Ausführung kann zusätzlich an dem Justagebalken 4 eine Magnetplatte befestigt werden, wobei diese an dem Justagebalken 4 mittels einer treppenartig ausgebildeten Aufhängevorrichtung, die an dem Justagebalken 4 eingehängt wird, in ihrer Winkelposition verstellbar an dem Justagebalken 4 befestigt wird. Auf diese Weise können in Fahrzeuge 34 integrierte Radarsysteme ebenfalls mithilfe des erfindungsgemäßen Verfahrens und der erfindungsgemäßen Vorrichtung kalkuliert werden.

Vorstehend ist somit ein Verfahren und eine Vorrichtung zur Kalibrierung von Assistenzsystemen in Fahrzeugen beschrieben, das mit vergleichsweise einfachen Werkzeugen in kürzester Zeit unter Einsparung des Aufwandes einer Achsvermessung herstellerübergreifend durchgeführt werden kann.

### BEZUGSZEICHENLISTE

- 1: Kalibriertafel
- 2: Justagebalken-Skala
- 3: Justagebalken-Spiegel
- 4: Justagebalken
- 5: Stellschraube
- 7: erste Feststellschraube
- 8: Haltegriff
- 9: Messstab
- 10: Messstab-Markierung
- 11: Kalibrierungswand
- 12: Fahrgestell
- 13, 13': Längsschienen
- 14: Querträger
- 15: Haltegestell

- 20: Radaufnehmer
- 21: Tragestab
- 22: Tragegriff
- 23: Radaufnehmer-Libelle
- 24: Radaufnehmer-Skala
- 25: weitere Feststellschraube
- 26: Aufhängevorrichtung
- 27: Pufferelemente
- 28: Querstange
- 29: Kreuzverbinder
- 30: Welle
- 31: Laser-Feststellschraube
- 32: Laser
- 33: Radmittelpunkt
- 34: Fahrzeug

- A: Abstand

## Patentansprüche

1. Vorrichtung zur Kalibrierung von Fahrassistenzsystemen in Fahrzeugen, umfassend
- eine fahrbare Kalibrierungswand (11),
wobei die Kalibrierungswand (11) ein Fahrgestell (12) umfasst, auf dem ein Haltegestell (15) aufgerichtet ist, an dem eine Kalibriertafel (1) mit aufgedrucktem oder sonstig aufgebrachtem, austauschbarem Kalibrierungs-Soll-Bild höhenverstellbar befestigt ist und zusätzlich zwischen dem Fahrgestell (12) und der Kalibriertafel (1) ein Justagebalken (4), dessen Längserstreckung größer als oder gleich einer üblichen Fahrzeugbreite ist, parallel zur Erstreckungsebene der Kalibriertafel (1) höhenverstellbar an dem Haltegestell (15) befestigt ist,
wobei der Justagebalken (4) jeweils im Endbereich seiner Längserstreckung mit Justagebalken-Spiegeln (3) versehen ist, wobei diese Justagebalken-Spiegel (3) auf der gleichen Seite des Justagebalkens (4) angeordnet sind wie das Kalibrierungs-Soll-Bild, nämlich jeweils in Richtung eines vor der Kalibrierungswand (11) zu positionierenden Fahrzeuges (34),
- zwei Radaufnehmer (20), die jeweils an den beiden Vorderrädern des Fahrzeuges (34) befestigbar sind,
wobei die Radaufnehmer (20) jeweils einen Tragestab (21) umfassen, an dem bei bestimmungsgemäßer Ausrichtung des Tragestabes (21) von oben nach unten, jeweils voneinander beabstandet befestigt sind:
- eine, vorzugsweise rechteckförmige, Radaufnehmer-Skala (24) mit einer Strichskalierung, die mittels wenigstens einer weiteren Fest-
stellschraube (25) an dem Tragestab (21) höhenverstellbar befestigt ist,
- eine zweiflügelige Aufhängevorrichtung (26) und
- ein Laser (32), der mittels einer Laser-Feststellschraube (31) höhenverstellbar befestigt ist.

2. Vorrichtung nach Anspruch 1, **dadurch gekennzeichnet, dass** der Justagebalken (4) jeweils im Endbereich seiner Längserstreckung mit je einer Justagebalken-Skala (2) mit Strichskalierung bestückt ist, die bei bestimmungsgemäßer Ausrichtung der Kalibrierungswand (11) ebenfalls in Richtung eines vor der Kalibrierungswand (11) zu positionierenden Fahrzeuges (34) angeordnet ist.

3. Vorrichtung nach Anspruch 1 oder 2, **dadurch gekennzeichnet, dass** das Fahrgestell (12) der Kalibrierungswand (11) aus zwei voneinander beanstandet angeordneten Längsschienen (13, 13') besteht, die einander parallel, jeweils im rechten Winkel zur Erstreckungsebene der Kalibriertafel (1) angeordnet und durch einen Querträger (14) miteinander verbunden sind, wobei die Längsschienen (13, 13') jeweils mit wenigstens einer Gewindebohrung versehen sind, die zum Ausgleich von Bodenunebenheiten jeweils mit einer Stellschraube zum Zwecke der waagerechten Ausrichtung der Kalibriertafel (1) bestückt sind.

4. Vorrichtung nach Anspruch 3, **dadurch gekennzeichnet, dass** der Justagebalken (4) mit einer Justagebalken-Libelle zur Überprüfung der waagerechten Ausrichtung der Kalibrierungswand (11) und damit auch der Kalibriertafel (1) versehen ist.

5. Vorrichtung nach einem oder mehreren der vorhergehenden Ansprüche, **dadurch gekennzeichnet, dass** die höhenverstellbare Kalibriertafel (1) auf der dem Kalibrierungs-Soll-Bild abgewandten Rückseite mit einem Haltegriff (8) zur Höhenverstellung der Kalibriertafel (1) versehen ist.

6. Vorrichtung nach Anspruch 5, **dadurch gekennzeichnet, dass** die Kalibriertafel (1) mittels wenigstens einer weiteren Feststellschraube (25) in der bestimmungsgemäßen Höhe an dem Haltegestell (15) fixierbar ist.

7. Vorrichtung nach Anspruch 5 oder Anspruch 6, **dadurch gekennzeichnet, dass** zumindest der Haltegriff (8) und der Justagebalken (4) sowie der Querträger (14) des Fahrgestells (12) jeweils mit einer Durchführung für einen lotrecht durch die Durchführungen geführten Messstab (9) versehen sind, der bestimmungsgemäß auf dem Aufstellgrund des Fahrgestells (12) aufsteht.

8. Vorrichtung nach Anspruch 1, **dadurch gekennzeichnet, dass** die Tragestäbe (21) an ihrem, bei bestimmungsgemäßer Ausrichtung der Radaufnehmer (20) oberen Ende zur Ausbildung eines Tragegriffs (22) abgewinkelt sind.

9. Vorrichtung nach Anspruch 1 und/oder Anspruch 8, **dadurch gekennzeichnet, dass** die mit dem Tragestab (21) des Radaufnehmers (20) jeweils verbundenen Radaufnehmer-Skalen (24) jeweils mit einer Radaufnehmer-Libelle (23) bestückt sind, um die waagerechte Positionierung der Radaufnehmer-Skala (24) und damit auch die lotrechte Ausrichtung des Tragestabs (21) sichtbar zu machen.

10. Vorrichtung nach Anspruch 9, **dadurch gekennzeichnet, dass** die Laser (32) jeweils mit den Tragestäben (21) der Radaufnehmer (20) über eine Welle (30) mit einer Durchführung für die Tragestäbe (21) verbunden sind und diese Welle (30) auf ihrer dem Laser (32) abgewandten Stirnseite in einen Kreuzverbinder (29) münden, an dem bei bestimmungsgemäßer Ausrichtung der Radaufnehmer (20) jeweils eine waagerecht angeordnete Querstange (28) befestigt ist, wobei diese Querstangen (28) jeweils an ihren beiden Enden jeweils mit je einem Pufferelement (27) als Abstandshalter bestückt sind.

11. Vorrichtung nach einem oder mehreren der vorhergehenden Ansprüche, **dadurch gekennzeichnet, dass** zur Kalibrierung von Radarsystemen an dem Justagebalken (4) der Kalibrierungswand (11) eine Magnetplatte befestigbar ist.

12. Vorrichtung nach Anspruch 11, **dadurch gekennzeichnet, dass** die Magnetplatte winkelverstellbar, vorzugsweise in 2°-Winkelschritten verstellbar, an dem Justagebalken (4) befestigbar ist.

13. Verfahren zur Kalibrierung von Fahrassistenzsystemen in Fahrzeugen mit folgenden Schritten:
- Positionierung eines Fahrzeuges (34) mit einem zu kalibrierenden Fahrassistenzsystem, das vorzugsweise in die Windschutzscheibe des Fahrzeuges (34) integriert ist, vor einer fahrbaren Kalibrierungswand (11) oder, umgekehrt, Positionierung der fahrbaren Kalibrierungswand (11) vor diesem Fahrzeug (34), zumindest annähernd so, dass die Kalibrierungswand (11) parallel zur Fahrzeugfront des Fahrzeuges (34) ausgerichtet ist und zumindest annähernd so, dass das Fahrzeug (34) mittig vor der Kalibrierungswand (11) positioniert ist,
- anschließend je einen Radaufnehmer (20) mittels einer zweiflügeligen Aufhängevorrichtung (26) des Radaufnehmers (20) an den beiden Vorderrädern des Fahrzeuges (34) einhängen und bei beiden Radaufnehmern (20) je eine Laser-Feststellschraube (31) zur Befestigung eines Lasers (32) an einem Tragestab (21) des Radaufnehmers (20) lösen, so dass der mittels der Laser-Feststellschraube (31) höhenverstellbar befestigte Laser (32) höhenverstellbar ist, und anschließend den Laser (32) so positionieren, dass die Zentralachse der Welle (30) und damit auch der Laser (32) aufgrund dessen entsprechender Anordnung auf Höhe des jeweiligen Radmittelpunktes des Fahrzeuges (34) positioniert ist, und schließlich die Laser-Feststellschraube (31) in dieser Position wieder fixieren,
- anschließend Vermessung des jeweiligen Abstandes A der Radmittelpunkte der Vorderräder des Fahrzeuges (34) zu einem in gleicher Ebene wie die Kalibriertafel (1) angeordneten Justagebalken (4) der Kalibrierungswand (11), wobei bei gleichen Abständen der beiden Rad mittel punkte der Vorderräder des Fahrzeuges (34) zur Kalibrierungswand (11) und damit auch zur Kalibriertafel (1) die Kalibrierungswand (11) parallel zur Fahrzeugfront ausgerichtet ist,
- Positionierung der Kalibriertafel (1) der fahrbaren Kalibrierungswand (11) in einem vom Hersteller der Fahrassistenzsysteme zur Kalibrierung vorgesehenen Abstand, unter Beibehaltung der zur Fahrzeugfront parallelen Ausrichtung der Kalibrierungswand (11),
- Umsetzung der beiden Radaufnehmer (20) auf die Hinterräder des Fahrzeuges (34), die dann wieder, wie vorstehend im Zusammenhang mit den Vorderrädern ausgeführt, so zu positionieren sind, dass die Zentralachsen der Wellen (30) der Radaufnehmer (20) jeweils mit den Radmittelpunkten der Hinterräder des Fahrzeugs (34) fluchten und dementsprechend ebenfalls eine an dem Tragestab (21) befestigte Radaufnehmer-Skala (24) waagerecht ausgerichtet ist, oder, anders ausgedrückt, die Tragestäbe (21) der Radaufnehmer (20) jeweils lotrecht ausgerichtet sind,
- dann die Laser (32) der an den Hinterrädern des Fahrzeuges (34) befestigten Radaufnehmer (20) eingeschaltet werden und so ausgerichtet werden,
- dass die Laserstrahlen auf die oberhalb des Justagebalkens (4) an dessen beidseitigen Endseiten angeordneten Justagebalken-Skalen (2), die ebenfalls mit einer Strichskalierung versehen sind, gerichtet werden,
- dann die fahrbare Kalibrierungswand (11) so verschoben wird, dass die Laserstrahlen sowohl auf der linken als auch auf der rechten Justagebalken- Skala (2) oberhalb des Justagebalkens (4), erkennbar an demselben Strich, die jeweilige Justagebalken-Skala (2) treffen, mithin die Kalibrierungswand (11) mittig vor dem Fahrzeug (34) positioniert ist, und dann
- die Laser (32) der an den Hinterrädern befestigten Radaufnehmer (20) jeweils auf die an den beidseitigen Endbereichen des Justagebalkens (4) der Kalibrierungswand (11) angeordneten Justagebalken-Spiegel (3) gerichtet werden,
- wobei dann diese Justagebalken-Spiegel (3) die Laserstrahlen des Lasers (32) derart reflektieren, dass die reflektierten Laserstrahlen jeweils auf die Strichskalen der Radaufnehmer-Skalen (24) der Radaufnehmer (20) gerichtet sind,
- und im Weiteren dann die fahrbare Kalibrierungswand (11) so verschoben wird, dass der Laserstrahl auf beiden Radaufnehmer-Skalen (24) erkennbar an identischer Stelle auftrifft,
- mithin die Kalibrierungswand (11) parallel zur Front des Fahrzeuges (34) ausgerichtet ist, und dann
- die Kalibrierungswand (11) mittels Stellschrauben des Fahrgestells (12) der Kalibrierungswand (11) so ausgerichtet wird, dass die Oberkante der Kalibriertafel (1) horizontal und die Erstreckungsebene der Kalibriertafel (1) lotrecht ausgerichtet ist,
- anschließend die Kalibriertafel (1) an dem Haltegestell (15) der Kalibrierungswand (11) in der von dem Hersteller des zu kalibrierenden Fahrassistenzsystems vorgeschrieben Höhe fixiert wird und dann mittels eines an das Fahrzeugsystem des jeweiligen Fahrzeuges (34) angeschlossenen Diagnosegerätes die Kalibrierung des Fahrassistenzsystems durchführbar ist.

14. Verfahren zur Kalibrierung von Fahrassistenzsystem in Fahrzeugen gemäß Anspruch 13, **dadurch gekennzeichnet, dass** der jeweilige Abstand der Radaufnehmer (20) zu dem Justagebalken(4) mittels eines mit dem Justagebalken (4) verbundenen, ausziehbaren Bandmaßes ermittelbar ist.

15. Verfahren nach Anspruch 13 oder 14, **dadurch gekennzeichnet, dass** die die jeweilige Höhe der Kalibriertafel (1) an einem an dem Haltegestell (15) lotrecht befestigten Messstab (9) ablesbar ist.

## Claims

1. Device for calibrating driver assistance systems in vehicles, said device comprising
- a mobile calibration wall (11),
wherein the calibration wall (11) comprises a chassis (12), on which there is erected a holding frame (15), to which a calibration panel (1) is fastened height-adjustably, said calibration panel having an exchangeable target calibration image, which is printed on or otherwise applied, and additionally between the chassis (12) and the calibration panel (1) there is fastened an adjustment beam (4), the longitudinal extension of which is greater than or equal to a conventional vehicle width, said adjustment beam being fastened height-adjustably to the holding frame (15), parallel to the plane of extension of the calibration panel (1),
wherein the adjustment beam (4) is provided with adjustment beam mirrors (3) in each end region of its longitudinal extension, wherein these adjustment beam mirrors (3) are arranged on the same side of the adjustment beam (4) as the target calibration image, specifically in each case in the direction of a vehicle (34) to be positioned in front of the calibration wall (11),
- two wheel sensors (20), which are fastenable one to each of the two front wheels of the vehicle (34),
wherein the wheel sensors (20) each comprise a support rod (21), to which, when the support rod (21) is correctly oriented, there are fastened from top to bottom, in each case at a distance from one another,
- a preferably rectangular wheel sensor scale (24), with a line scale, which is fastened height-adjustably to the support rod (21) by means of at least one further locking screw (25),
- a two-pronged suspension device (26) and
- a laser (32), which is fastened height-adjustably by means of a laser locking screw (31).

2. The device according to claim 1, **characterized in that** the adjustment beam (4) is equipped in each end region of its longitudinal extension with an adjustment beam scale (2) with line scale, which, when the calibration wall (11) is correctly oriented, is likewise arranged in the direction of a vehicle (34) to be positioned in front of the calibration wall (11).

3. The device according to claim 1 or 2, **characterized in that** the chassis (12) of the calibration wall (11) consists of two longitudinal rails (13, 13') which are distanced from one another, which are arranged parallel to one another, in each case at right angles to the plane of extension of the calibration panel (1), and are connected to one another by a cross-member (14), wherein the longitudinal rails (13, 13') are each provided with at least one threaded bore, and said bores, in order to compensate for unevennesses in the ground, are each equipped with an adjusting screw for the purpose of orienting the calibration panel (1) horizontally.

4. The device according to claim 3, **characterized in that** the adjustment beam (4) is provided with an adjustment beam spirit level for checking the horizontal orientation of the calibration wall (11) and thus also the calibration panel (1).

5. The device according to one or more of the preceding claims, **characterized in that** the height-adjustable calibration panel (1) is provided on the rear side, facing away from the target calibration image, with a handle (8) for adjusting the height of the calibration panel (1).

6. The device according to claim 5, **characterized in that** the calibration panel (1), by means of at least one further locking screw (25), is fixable at the intended height on the holding frame (15).

7. The device according to claim 5 or claim 6, **characterized in that** at least the handle (8) and the adjustment beam (4) and also the cross-member (14) of the chassis (12) are in each case provided with a feedthrough for a measuring stick (9), which is guided vertically through the feedthroughs and is intended to stand on the ground supporting the chassis (12).

8. The device according to claim 1, **characterized in that** the support rods (21) are angled at their end which is the upper end when the wheel sensors (20) are correctly oriented, so as to form a carry handle (22).

9. The device according to claim 1 and/or claim 8, **characterized in that** the wheel sensor scales (24) each connected to the support rod (21) of the wheel sensor (20) are each equipped with a wheel sensor spirit level (23) in order to visualize the horizontal positioning of the wheel sensor scale (24) and thus also the vertical orientation of the support rod (21).

10. The device according to claim 9, **characterized in that** the lasers (32) are in each case connected to the support rods (21) of the wheel sensors (20) by means of a shaft (30) with a feedthrough for the support rods (21) and these shafts (30) lead at their end face furthest from the laser (32) into a cross connector (29), to which there is fastened, when the wheel sensor (20) is correctly oriented, a horizontally arranged cross bar (28), wherein these cross bars (28) are equipped at each of their two ends with a buffer element (27) as spacer.

11. The device according to one or more of the preceding claims, **characterized in that** a magnetic plate is fastenable to the adjustment beam (4) of the calibration wall (11) in order to calibrate radar systems.

12. The device according to claim 11, **characterized in that** the magnetic plate is fastenable to the adjustment beam (4) at an adjustable angle, preferably adjustably in 2° angle steps.

13. A method for calibrating driver assistance systems in vehicles, said method having the following steps:
- positioning a vehicle (34), which has a driver assistance system to be calibrated which is preferably integrated in the windscreen of the vehicle (34), in front of a mobile calibration wall (11), or, conversely, positioning the mobile calibration wall (11) in front of this vehicle (34), at least approximately, such that the calibration wall (11) is oriented parallel to the front of the vehicle (34) and at least approximately such that the vehicle (34) is positioned centrally in front of the calibration wall (11),
- then, by means of a two-pronged suspension device (26) of the wheel sensor (20), hanging a wheel sensor (20) on each of the two front wheels of the vehicle (34) and, at both wheel sensors (20), releasing a laser locking screw (31) for fastening a laser (32) to a support rod (21) of the wheel sensor (20) so that the laser (32) fastened height-adjustably by means of the laser locking screw (31) is height-adjustable, and then positioning the laser (32) such that the central axis of the shaft (30) and thus also the laser (32), on account of the corresponding arrangement thereof, is positioned at the height of the particular wheel center of the vehicle (34), and lastly fixing the laser locking screw (31) again, in this position,
- then measuring the distance A between the wheel center of each of the front wheels of the vehicle (34) and an adjustment beam (4) of the calibration wall (11) arranged in the same plane as the calibration panel (1), wherein, if the distances between each of the two wheel centers of the front wheels of the vehicle (34) and the calibration wall (11) and thus also the calibration panel (1) are the same, the calibration wall (11) is oriented parallel to the front of the vehicle,
- positioning the calibration panel (1) of the mobile calibration wall (11) at a distance specified by the manufacturer of the driver assistance systems for calibration, whilst maintaining the orientation of the calibration wall (11) parallel to the front of the vehicle,
- transferring the two wheel sensors (20) to the rear wheels of the vehicle (34), which are then to be positioned as described above in conjunction with the front wheels, so that the central axes of the shafts (30) of the wheel sensors (20) are in each case aligned with the wheel centers of the rear wheels of the vehicle (34) and, accordingly, a wheel sensor scale (24) fastened to the support rod (21) is horizontally oriented, or, in other words, the support rods (21) of the wheel sensors (20) are each oriented vertically,
- then switching on the lasers (32) of the wheel sensors (20) fastened to the rear wheels of the vehicle (34) and orienting said lasers such
- that the laser beams are directed towards the adjustment beam scales (2), which are arranged above the adjustment beam (4) at the two end sides thereof and are likewise provided with a line scale,
- then moving the mobile calibration wall (11) such that the laser beams discernibly contact the adjustment beam scales (2) at the same line, both on the left and right adjustment beam scale (2) above the adjustment beam (4), and consequently the calibration wall (11) is positioned centrally in front of the vehicle (34), and then
- directing the lasers (32) of the wheel sensors (20) fastened to the rear wheels towards one each of the adjustment beam mirrors (3) arranged in the end regions on either side of the adjustment beam (4) of the calibration wall (11),
- wherein these adjustment beam mirrors (3) then reflect the laser beams of the laser (32) in such a way that the reflected laser beams are each directed onto the line scales of the wheel sensor scales (24) of the wheel sensors (20),
- and then moving the mobile calibration wall (11) such that the laser beam discernibly contacts both wheel sensor scales (24) at identical positions,
- and consequently the calibration wall (11) is oriented parallel to the front of the vehicle (34), and then
- orienting the calibration wall (11) by means of adjusting screws of the chassis (12) of the calibration wall (11) such that the upper edge of the calibration panel (1) is oriented horizontally and the plane of extension of the calibration panel (1) is oriented vertically,
- then fixing the calibration panel (1) on the holding frame (15) of the calibration wall (11) at the height stipulated by the manufacturer of the driver assistance system to be calibrated, and then being able to perform the calibration of the driver assistance system by means of a diagnosis device connected to the vehicle system of the particular vehicle (34).

14. The method for calibrating a driver assistance system in vehicles according to claim 13, **characterized in that** the distance between the wheel sensors (20) and the adjustment beam (4) is determinable by means of an extendable measuring tape connected to the adjustment beam (4).

15. The method according to claim 13 or 14, **characterized in that** the height of the calibration panel (1) is readable from a measuring stick (9) fastened vertically to the holding frame (15).

## Revendications

1. Dispositif d'étalonnage de systèmes d'aide à la conduite dans des véhicules, comprenant
- un panneau d'étalonnage (11) mobile,
dans lequel le panneau d'étalonnage (11) comprend un châssis mobile (12), sur lequel est érigé un cadre de maintien (15), auquel est fixé un tableau d'étalonnage (1) avec une image d'étalonnage souhaité échangeable, imprimée ou autrement appliquée, étant réglable en hauteur, et, en complément, une barre de réglage (4), dont l'extension longitudinale est supérieure ou égale à une largeur de véhicule usuelle, est fixée en étant réglable en hauteur, entre le châssis mobile (12) et le tableau d'étalonnage (1), parallèlement au plan d'extension du tableau d'étalonnage (1), sur le cadre de maintien (15),
dans lequel la barre de réglage (4) est munie respectivement, dans la zone d'extrémité de son extension longitudinale, de miroirs de barre de réglage (3), où ces miroirs de barre de réglage (3) sont disposés sur le même côté de la barre de réglage (4) que l'image d'étalonnage souhaité, à savoir respectivement en direction d'un véhicule (34) devant être positionné devant le panneau d'étalonnage (11),
- deux capteurs de roue (20), qui peuvent être respectivement fixés aux deux roues avant du véhicule (34),
dans lequel les capteurs de roue (20) comprennent respectivement une tige de support (21), sur laquelle, pour une orientation appropriée de la tige de support (21), du haut vers le bas, séparée l'une de l'autre, sont fixé(e)s:
- des échelles de capteur de roue (24), de préférence de forme rectangulaire, avec un étalonnage par traits, qui sont respectivement fixées en étant réglables en hauteur sur la tige de support (21) au moyen d'une autre vis de fixage (25),
- un dispositif de suspension (26) à deux bras, et
- un laser (32), qui est fixé réglable en hauteur au moyen d'une vis de fixage de laser (31).

2. Dispositif selon la revendication 1, **caractérisé en ce que** la barre de réglage (4) est munie, respectivement dans la zone d'extrémité de son extension longitudinale, chaque fois, d'une échelle de barre de réglage (2) avec un étalonnage par traits, qui, pour une orientation appropriée du panneau d'étalonnage (11), est également disposée en direction du véhicule (34) devant être positionné devant le panneau d'étalonnage (11).

3. Dispositif selon la revendication 1 ou la revendication 2, **caractérisé en ce que** le châssis mobile (12) du panneau d'étalonnage (11) est constitué de deux rails longitudinaux (13, 13') disposés espacés l'un par rapport à l'autre, qui sont disposés parallèles l'un par rapport à l'autre, respectivement à angle droit par rapport au plan d'extension du tableau d'étalonnage (1) et sont reliés l'un à l'autre par un support transversal (14), où les rails longitudinaux (13,13') sont munis respectivement d'au moins un alésage fileté, qui est pourvu, pour l'équilibrage d'irrégularités du sol, respectivement d'une vis de réglage afin d'obtenir une orientation horizontale du tableau d'étalonnage (1).

4. Dispositif selon la revendication 3, **caractérisé en ce que** la barre de réglage (4) est munie d'un niveau de barre de réglage permettant la vérification de l'orientation horizontale du panneau d'étalonnage (11) et, de ce fait, également du tableau d'étalonnage (1).

5. Dispositif selon une ou plusieurs des revendications précédentes, **caractérisé en ce que** le tableau d'étalonnage (1) réglable en hauteur est muni d'une poignée de maintien (8) sur la face arrière opposée à l'image d'étalonnage souhaité pour le réglage en hauteur du tableau d'étalonnage (1).

6. Dispositif selon la revendication 5, **caractérisé en ce que** le tableau d'étalonnage (1) peut être fixé à la hauteur appropriée sur le cadre de maintien (15) au moyen d'au moins une nouvelle vis de fixage (25).

7. Dispositif selon la revendication 5 ou la revendication 6, **caractérisé en ce qu'**au moins la poignée de maintien (8) et la barre de réglage (4), ainsi que le support transversal (14) du châssis mobile (12), sont pourvus respectivement d'un passage pour une jauge (9), menée perpendiculairement à travers les passages, qui repose de manière appropriée sur la base d'élévation du châssis mobile (12).

8. Dispositif selon la revendication 1, **caractérisé en ce que** les tiges de support (21), au niveau de leur extrémité supérieure, sont articulées pour une orientation appropriée des capteurs de roue (20) permettant la formation d'une poignée de support (22).

9. Dispositif selon la revendication 1 et/ou la revendication 8, **caractérisé en ce que** les échelles de capteur de roue (24) reliées respectivement avec la tige de support (21) du capteur de roue (20) sont respectivement pourvues de niveaux de capteur de roue (23) afin de mettre en évidence le positionnement horizontal de l'échelle de capteur de roue (24) et, par conséquent, également l'orientation verticale de la tige de support (21).

10. Dispositif selon la revendication 9, **caractérisé en ce que** les lasers (32) sont respectivement reliés avec les tiges de support (21) des capteurs de roue (20) par le biais d'un arbre (30) avec un passage pour les tiges de support (21) et cet arbre (30) débouchent sur la face avant opposée au laser (32) dans un connecteur croisé (29), sur lequel, pour une orientation appropriée des capteurs de roue (20), il y a respectivement une barre transversale (28) disposée horizontalement, où ces barres transversales (28) sont respectivement munies à leurs deux extrémités d'un élément tampon (27) servant d'espaceur.

11. Dispositif selon une ou plusieurs des revendications précédentes, **caractérisé en ce que**, pour l'étalonnage de systèmes radar, une plaque magnétique peut être fixée sur la barre de réglage (4) du panneau d'étalonnage (11).

12. Dispositif selon la revendication 11, **caractérisé en ce que** la plaque magnétique peut être fixée sur la barre de réglage (4) de manière réglable au niveau de l'angle, de préférence réglable par des pas angulaires de 2 °.

13. Procédé d'étalonnage de systèmes d'aide à la conduite dans des véhicules avec les étapes suivantes :
- positionnement d'un véhicule (34) avec un système d'aide à la conduite à étalonner, qui est de préférence intégré dans le pare-brise du véhicule (34), devant un panneau d'étalonnage (11) mobile, ou inversement, positionnement du panneau d'étalonnage (11) mobile devant ce véhicule (34), au moins approximativement de manière que le panneau d'étalonnage (11) est orienté parallèlement à l'avant de véhicule du véhicule (34) et au moins approximativement de manière que le véhicule (34) soit positionné de manière centrale devant le panneau d'étalonnage (11),
- ensuite, accrocher, chaque fois, un capteur de roue (20) au moyen d'un dispositif de suspension (26) à deux bras du capteur de roue (20) aux deux roues avant du véhicule (34) et, pour les deux capteurs de roue (20), libérer chaque fois une vis de fixage de laser (31) pour la fixation d'un laser (32) sur une tige de support (21) du capteur de roue (20), de sorte que le laser (31) fixé en étant réglable en hauteur au moyen de la vis de fixage de laser (31) puisse être réglé en hauteur, et ensuite, positionner le laser (32) de telle manière que l'axe central de l'arbre (30), et de ce fait, également le laser (32), en raison de sa disposition correspondente, est positionné au niveau du centre de roue respectif du véhicule (34), et finalement de nouveau fixer la vis de fixage de laser (31) dans cette position,
- ensuite, mesure de la distance A respective des centres de roues des roues avant du véhicule (34) jusqu'à une barre de réglage (4) du panneau d'étalonnage (11) disposée dans le même plan que le tableau d'étalonnage (1), où, pour des distances égales des deux centres de roue des roues avant du véhicule (34) jusqu'au panneau d'étalonnage (11), et, par conséquent, également jusqu'au tableau d'étalonnage (1), le panneau d'étalonnage (11) est orienté parallèlement par rapport à l'avant de véhicule,
- positionnement du tableau d'étalonnage (1) du panneau d'étalonnage (11) mobile à une distance prévue pour l'étalonnage par le fabricant de systèmes d'aide à la conduite, tout en conservant l'orientation du panneau d'étalonnage (11) de manière parallèle à l'avant de véhicule,
- déplacement des deux capteurs de roue (20) sur les roues arrières du véhicule (34), qui sont alors, de nouveau, comme exécuté précédemment pour les roues avant, à positionner de telle manière que les axes centraux des arbres (30) des capteurs de roue (20) soient respectivement alignés avec les centres de roue des roues arrières du véhicule (34) et que, de manière correspondante, échelle de capteur de roue (24) fixée sur la tige se support (21) déjà citée est orientée horizontalement, ou que, autrement dit, les tiges de support (21) des capteurs de roue (20) sont respectivement orientées verticalement,
- on branche ensuite les lasers (32) des capteurs de roue (20) qui sont fixés sur les roues arrière du véhicule (34) et on les oriente de telle manière,
- que les rayons laser soient orientés sur les échelles de barre de réglage (2), qui sont également pourvues avec un étalonnage par traits, disposées au-dessus de la barre de réglage (4) au niveau de ses côtés d'extrémité des deux côtés,
- puis le panneau d'étalonnage (11) mobile est décalé de sorte que les rayons laser tombent, à la fois sur les échelles de barre de réglage (2) à droite et à gauche au-dessus de la barre de réglage (4), reconnaissables par le même trait, sur l'échelle de barre de réglage (2), par conséquent le panneau d'étalonnage (11) est positionné de manière centrale devant le véhicule (34), et puis
- les lasers (32) des capteurs de roue (20) fixés sur les roues arrières sont respectivement orientés sur les miroirs de barres de réglage (3) disposés sur les zones d'extrémité des deux côtés de la barre de réglage (4) du panneau d'étalonnage (11),
- où, ensuite, ces miroirs de barre de réglage (3) réfléchissent les rayons laser du laser (32) de telle manière que les rayons laser réfléchis sont respectivement orientés sur les échelles de traits des échelles de capteur de roue (24) des capteurs de roue (20),
- et puis encore, le panneau d'étalonnage (11) mobile est décalé de telle manière que le rayon laser tombe sur les deux échelles de capteur de roue(24) reconnaissablement au même endroit,
- par conséquent le panneau d'étalonnage (11) est orienté parallèlement par rapport à l'avant du véhicule (34), et puis
- le panneau d'étalonnage (11) est orienté au moyen des vis de réglage du châssis mobile (12) du panneau d'étalonnage (11) de sorte que le bord supérieur du tableau d'étalonnage (1) est orienté horizontalement et le plan d'extension du tableau d'étalonnage (1) est orienté verticalement,
- ensuite le tableau d'étalonnage (1) est fixé sur le cadre de maintien (15) du panneau d'étalonnage (11) à la hauteur prescrite par le fabricant du système d'aide à la conduite à étalonner, et ensuite l'étalonnage du système d'aide à la conduite peut être exécuté au moyen d'un appareil de diagnostic raccordé au système d'aide à la conduite de véhicule du véhicule (34) respectif.

14. Procédé d'étalonnage d'un système d'aide à la conduite dans des véhicules selon la revendication 13, **caractérisé en ce que** la distance respective des capteurs de roue (20) jusqu'à la barre de réglage (4) peut être déterminée au moyen d'un ruban à mesurer extensible relié avec la barre de réglage (4).

15. Procédé selon la revendication 13 ou la revendication 14, **caractérisé en ce que** la hauteur respective du tableau d'étalonnage (1) peut être lue sur une jauge (9) fixée verticalement sur le cadre maintien (15).
